# EUROPÄISCHE PATENTSCHRIFT

(11) **EP 4 568 804 B1**
(45) Veröffentlichungstag und Bekanntmachung des Hinweises auf die Patenterteilung: **07.10.2026**
(21) Anmeldenummer: 23757698.8
(22) Anmeldetag: 01.08.2023
(51) Int. Cl.: B23K 26/142, B23K 26/14, B23K 26/21

(54) **LUFTFÜHRUNGSVORRICHTUNG ZUR SPRITZERREDUKTION, SPRITZERABLENKUNG UND VERBESSERUNG EINER SCHWEISSNAHTQUALITÄT BEIM LASERSTRAHLSCHWEISSEN UND SCHWEISSVORRICHTUNG**
AIR-GUIDING DEVICE FOR SPATTER REDUCTION, SPATTER DEFLECTION AND IMPROVEMENT OF A WELD SEAM QUALITY IN LASER BEAM WELDING, AND WELDING DEVICE
DISPOSITIF DE GUIDAGE D'AIR À DES FINS DE RÉDUCTION DE PROJECTIONS, DÉVIATION DE PROJECTIONS ET AMÉLIORATION D'UNE QUALITÉ DE CORDON DE SOUDURE DANS UN SOUDAGE PAR FAISCEAU LASER, ET DISPOSITIF DE SOUDAGE

(30) Priorität: 08.08.2022 DE 102022208240
(43) Veröffentlichungstag der Anmeldung: 18.06.2025
(73) Patentinhaber: Adient US LLC, Plymouth MI 48170 (US)
(72) Erfinder: KRAUS, Arvid, 67817 Imsbach (DE); DUTT, Patrick Thomas, 67659 Kaiserslautern (DE); WEINGART, Holger, 67700 Niederkirchen-Wörsbach (DE); KRAUS, Johannes, 66849 Landstuhl (DE)
(74) Vertreter: Liedtke & Partner Patentanwälte
(86) Internationale Anmeldenummer: PCT/IB2023/057789
(87) Internationale Veröffentlichungsnummer: WO 2024/033751

(56) Entgegenhaltungen:
- EP-A1- 0 732 169
- DE-A1- 102005 025 119
- DE-A1- 102006 045 554
- DE-A1- 102013 214 925
- DE-U1- 202015 102 740
- JP-A- S59 163 093

## Beschreibung

Die Erfindung betrifft eine Luftführungsvorrichtung zur Spritzerreduktion, Spritzerablenkung und zur Verbesserung einer Schweißnahtqualität durch eine Prozessstabilisierung, beispielsweise zur Beeinflussung von Schweißspritzern und einer Dampffackel sowie eines Prozessleuchtens während einer Bearbeitung eines Werkstücks. Des Weiteren betrifft die Erfindung eine Schweißvorrichtung zur Bearbeitung eines Werkstücks mit zumindest einer Schweißoptik und einer, insbesondere optikfesten, Luftführungsvorrichtung.

### Stand der Technik

Laserschweißanlagen weisen eine Laserstrahlquelle auf. Ein Schweißkopf ist an einem Roboterarm oder einem anderen Manipulator befestigt und weist eine Schweißoptik auf, durch die der Laserstrahl auf dem Werkstück fokussiert wird. Beim Schweißen von beschichteten oder unbeschichteten Werkstücken aus schweißbaren Materialien kommt es aufgrund der hohen Energiedichte des Laserstrahls und der hohen Schmelzbaddynamik oft zur Bildung von Schweißspritzern, d. h. schmelzflüssige Partikel werden weggeschleudert. Weiterhin führen Verbrennungsrückstände oder Beschichtungen des Werkstücks zur Bildung von Schmauch oder Rauchgas. Diese Substanzen können leicht die Schweißoptik beschädigen oder verschmutzen. Die Schweißoptik wird deshalb zumeist durch ein Schutzglas geschützt. Auch dieses Schutzglas muss jedoch von hoher optischer Qualität sein und ist deshalb verhältnismäßig kostspielig. Dies gilt insbesondere für scannende Schweißvorrichtungen und/oder Schweißoptiken, bei denen der Laserstrahl über ein Spiegelsystem abgelenkt wird und demzufolge das Schutzglas einen relativ großen Durchmesser haben muss.

Eine Laserschweißvorrichtung ist beispielsweise aus der DE 20 2015 102 740 U1 bekannt, mit einer Schweißoptik zur Strahlformung eines auf ein Werkstück gerichteten Laserstrahls und mit einer Spritzerschutzeinrichtung in der Form einer Düse zur Erzeugung eines Luftstroms in einem Raum zwischen der Schweißoptik und dem Werkstück.

Des Weiteren sind aus der EP 0 732 169 A1 (offenbarend den Oberbegriff des Anspruchs 1) und der DE 10 2006 045 554 A1 Vorrichtungen zum Schutz einer Bearbeitungsoptik eines Laser-Bearbeitungsgerätes bekannt. Aus der DE 10 2013 214 925 A1 ist eine Einhausung für einen Strahlengang in einem Laserbearbeitungsverfahren bekannt.

### Aufgabe

Der Erfindung liegt die Aufgabe zu Grunde, eine Luftführungsvorrichtung der eingangs genannten Art zu verbessern, insbesondere durch konstante Erzeugung oder durch konstante Bildung eines auf eine Schweißstelle ausrichtbaren oder ausgerichteten Luftstroms, der zur Kontrolle sowie Reduktion einer Ausdehnung von Dampffackeln und Prozessleuchten und zur Optimierung einer Schweißnahtqualität durch Prozessstabilisierung sowie einer Verringerung und Lenkung von Schweißspritzern und Schweißrauch während eines Schweißvorgangs dient. Eine Integration von Luftstromverstärkern ermöglicht eine einfache Nachrüstbarkeit sowie einen energieeffizienten Betrieb. Des Weiteren liegt der Erfindung die Aufgabe zu Grunde, eine entsprechende Schweißvorrichtung, insbesondere Laserschweißvorrichtung, mit der zuvor genannten Luftführungsvorrichtung bereitzustellen, wobei die Luftführungsvorrichtung insbesondere optikfest angeordnet ist und mit einer diaboloförmigen Freiformstrahlung, insbesondere eines diaboloförmigen Luftstroms, ohne Verbindung zum Werkstück wirkt.

### Lösung

Diese Aufgabe wird erfindungsgemäß gelöst durch eine Luftführungsvorrichtung zur Beeinflussung von Schweißspritzern während einer Bearbeitung eines Werkstücks entsprechend Anspruch 1, inter alia umfassend zumindest eine ringförmige Düse zur Erzeugung eines auf eine Schweißstelle gerichteten Luftstroms, wobei die Düse zumindest einen Lufteinlass und zumindest einen Luftauslass aufweist, wobei der Lufteinlass an einer äußeren Umfangsfläche der Düse angeordnet ist und im Wesentlichen tangential in einen Luftkanal der Düse mündet.

Der Lufteinlass, insbesondere ein Einlasskanal oder Einlassrohr, mündet im Wesentlichen tangential in den Luftkanal der Düse. Der Luftkanal weist beispielsweise eine Ringform auf. Unter der Formulierung, dass der Lufteinlass im Wesentlichen tangential in den Luftkanal der Düse mündet, wird insbesondere verstanden, dass ein im Wesentlichen geradliniger Lufteinlass in einen ringförmigen Luftkanal mündet, so dass es einen Moment des Übergangs gibt, zu dem der geradlinig-tangentiale Lufteinlassstrom in einen kreisförmigen Luftstrom in dem Luftkanal übergeht. Dadurch, dass der zumindest eine Lufteinlass an der äußeren Umfangsfläche der Düse angeordnet ist und tangential in den Luftkanal der Düse mündet, sind Schweißspritzer, insbesondere Ausbreitungen von Schweißspritzern, verbessert beeinflussbar.

Durch den tangential angeordneten Lufteinlass und dadurch, dass der Lufteinlass tangential in den Luftkanal der Düse mündet, werden/wird ein Luftzufuhrweg und/oder Luftstromerzeugungsweg verkürzt. Dadurch ist ein Lufteinlass mit wenig Luftumlenkung ermöglicht.

Ein mittels der erfindungsgemäßen Luftführungsvorrichtung, insbesondere mittels der erfindungsgemäßen Düse, erzeugter Luftstrom führt zu einer Reduzierung und/oder Ablenkung von Schweißspritzern und/oder Dampffackeln. Durch einen solchen Luftstrom, insbesondere diaboloförmigen Luftstrom, der rotative Anteile enthält in Form eines sogenannten Vortex, kann ein Schweißprozess weitestgehend stabilisiert werden und ein flaches, kompaktes Prozessleuchten erzielt werden. Des Weiteren wird ein Strahlengang frei von Schweißspritzern und Schweißrauch gehalten, wodurch sich Optikstandzeiten verbessern.

Der zumindest eine Lufteinlass, beispielsweise aufweisend eine Einlassöffnung und einen Einlasskanal oder Einlassrohr, kann derart ausgerichtet sein, dass sich der Einlasskanal oder Einlassrohr tangential relativ zur äußeren Umfangsfläche der ringförmigen Düse erstreckt und in den Luftkanal, insbesondere Luftraum oder Hohlraum, tangential mündet. Eine Luftzufuhr in den Luftkanal erfolgt also tangential.

Durch die tangentiale Anordnung des Lufteinlasses können eine Kontrollierung und Steuerung des auf die Schweißstelle gerichteten Luftstroms verbessert werden. Des Weiteren ermöglicht der tangential angeordnete Lufteinlass eine Bildung des Luftstroms mit einer gewünschten Strömungsgeschwindigkeit und/oder einem gewünschten Luftdruck. Ein diaboloförmiger Luftstrom unterhalb der Düse, insbesondere ein sogenannter Vortex, kann in einfacher und schneller Weise erzeugt werden.

Die ringförmige Düse kann an einer Schweißoptik, beispielsweise einer Laserschweißoptik, befestigt werden. Die ringförmige Düse kann bei Scanneroptiken und/oder Optiken mit Standardlinsensystemen mit beispielsweise einem festen zentralen Schweißstrahl angewendet werden. Die spezifische Luftströmung, die durch beispielsweise eine Begasungseinheit erzeugt wird, führt zu einer optimierten Prozessrobustheit und einer kontrollierten Bildung von Dampffackeln und/oder kontrollierten Spritzerbildung bei beliebigen Schweißprozessen mit beliebigen Nahtgeometrien.

Die Funktion der Luftführungsvorrichtung kann wie folgt beschrieben werden: Die ringförmige Düse erzeugt einen rotationssymmetrischen Luftstrom, insbesondere Luftwirbel, im Bereich einer Strahlachse. Durch den zumindest einen tangential in den Luftkanal mündenden Lufteinlass am Umfang der ringförmigen Düse kann ein tangentialer Hochgeschwindigkeitsluftstrom erzeugt beziehungsweise gebildet werden. Dieser Luftstrom kann durch zumindest einen sogenannten Luftstromverstärker, später auch Luftstromverstärkungselement genannt, erzeugt werden.

Die in der Düse rotierende Luft verlässt den Luftkanal, auch Kammer genannt, mit hoher Geschwindigkeit entlang des Luftauslasses. Durch die entstehenden Druckverhältnisse strömt zusätzliche Umgebungsluft aus einem Bereich oberhalb und/oder unterhalb der Düse über einen Durchmesser der ringförmigen Düse, auch Ringkammer, Ringdüse oder Düsenring genannt, zur Schweißebene hinunter.

Vorteilhafte Ausgestaltungen, welche einzeln oder in Kombination miteinander eingesetzt werden können, sind Gegenstand der Unteransprüche.

Die ringförmige Düse kann in Segmente unterteilt sein. Beispielsweise kann die Düse zwei, drei oder mehr Lufteinlässe umfassen.

Bei mehreren Lufteinlässen kann die Düse in eine entsprechende Anzahl von Segmenten unterteilt sein. Bei zwei Segmenten sind diese jeweils halbkreisförmig ausgebildet. Jedem halbkreisförmigen Segment der Düse kann ein Lufteinlass zugeordnet sein. Die beiden Lufteinlässe können an zwei sich gegenüberliegenden äußeren Umfangsflächen jedes Segments angeordnet sein. Die Lufteinlässe können in einem Winkelbereich von 180° zueinander beabstandet oder versetzt angeordnet sein.

Bei drei Lufteinlässen kann die Düse in drei Segmente unterteilt sein. Insbesondere kann die Düse in drei gleiche, insbesondere gleichgroße, Segmente unterteilt sein. Jedem Segment der Düse kann dabei ein Lufteinlass zugeordnet sein. Die drei Lufteinlässe können rotationssymmetrisch am äußeren Umfang verteilt angeordnet sein. Die Lufteinlässe können jeweils in einem Winkelbereich von 120° zueinander beabstandet oder versetzt angeordnet sein.

Die ringförmige Düse kann in vier Segmenten unterteilt sein und vier Lufteinlässe aufweisen. Jedem Segment kann dabei ein Lufteinlass zugeordnet sein. Die vier Segmente können gleichgroß ausgebildet sein. Die vier Lufteinlässe können jeweils in einem gleichen Abstand und/oder in einem gleichen Winkel zueinander beabstandet angeordnet sein. Die Lufteinlässe können rotationssymmetrisch über die äußere Umfangsfläche der ringförmigen Düse verteilt angeordnet sein. Die Lufteinlässe können jeweils in einem Winkelbereich von 90° zueinander beabstandet oder versetzt angeordnet sein.

Die Funktion der Luftführungsvorrichtung kann wie folgt beschrieben werden: Die ringförmige Düse erzeugt einen rotationssymmetrischen Luftstrom, insbesondere Luftwirbel, im Bereich der Strahlachse. Dies geschieht durch die segmentierte ringkanalförmige Düse, insbesondere durch ihren Luftkanal oder ihre Luftkammer, mit einem Lufteinlass pro Segment, wobei durch die Lufteinlässe ein tangentialer Hochgeschwindigkeitsluftstrom in den Luftkanal oder die Luftkammer am Umfang der Düse eingeführt und anschließend aus dem Luftauslass ausgeführt werden kann. Dieser Luftstrom kann durch so genannte Luftstromverstärker, die mit Druckluft betrieben werden, oder durch ein Belüftungssystem mit entsprechenden Eigenschaften erzeugt werden.

Über die ringförmige Düse, auch Ringdüse genannt, mit einer Anzahl oder Mehrzahl tangential angeordneter Lufteinlässen kann ein diaboloförmiger Luftstrom, beispielsweise Luftwirbel oder Wirbelrohr oder Wirbelkanal, erzeugt werden. Beispielsweise kann ein rotationssymmetrischer Luftwirbel unterhalb der Düse erzeugt werden. Ein solcher Luftwirbel kann durch die segmentierte und ringkanalförmige Düse mit einem Lufteinlass pro Segment erzielt werden. Die in den Segmenten rotierende Luft kann den Luftkanal, d. h. die Düse, mit hoher Geschwindigkeit in Richtung des Luftauslasses verlassen.

Durch den Luftauslass, in Form eines Austrittsspalts, kann die rotierende Luft von der inneren Umfangsfläche schräg nach unten und leicht radial nach innen in Richtung der Schweißstelle gezielt konzentriert werden.

Der Luftauslass ist entsprechend der Erfindung in Form eines die innere Umfangsfläche der Düse umlaufenden Spalts ausgebildet. Der Luftauslass ist als Luftaustrittsspalt ausgebildet. Zur Ausbildung des Luftauslasses können zwei Düsenwände zueinander beabstandet angeordnet sein.

Der Luftauslass kann in einem vorgegebenen Winkel relativ zu einer durch die Düse verlaufende Vertikalachse ausgerichtet sein. Der Luftauslass kann in einem vorgegebenen Winkel von einer durch die innere Umfangsfläche definierten Ebene ausgerichtet sein. Der Luftauslass kann radial nach innen und unter einem Winkel von ca. 30° bis 50°, insbesondere 45°, auf die Schweißstelle gerichtet sein. Der beispielsweise ringförmige Luftauslass ist in einem Winkel von ca. 45° nach unten in Richtung des Werkstücks gerichtet.

Der Lufteinlass kann eine Anbindungsschnittstelle aufweisen, mittels der der Lufteinlass mit einem Luftstromverstärkungselement koppelbar oder gekoppelt ist. Über die Anbindungsschnittstelle kann der Lufteinlass auch mit einer herkömmlichen Belüftungseinheit, einem Gebläse und/oder mit einer Druckluftzufuhreinheit gekoppelt werden. Die Anbindungsschnittstelle kann eine Montageschnittstelle sein und eine Anzahl von Verbindungselementen, wie Öffnungen, beispielsweise Schrauböffnungen, und/oder Schrauben oder Bolzen aufweisen. Der Lufteinlass kann mit dem Luftstromverstärkungselement oder mit der Belüftungseinheit lösbar oder unlösbar verbunden werden. Der Lufteinlass kann mit dem Luftstromverstärkungselement oder mit der Belüftungseinheit kraftschlüssig, formschlüssig und/oder stoffschlüssig verbunden sein.

Das Luftstromverstärkungselement kann ein herkömmliches Metallprodukt sein. Das Luftstromverstärkungselement kann einen sogenannten Coanda-Effekt nutzen, um einen Volumenstrom zu erhöhen, der durch die ringförmige Düse gedrückt wird.

In sämtlichen beschriebenen Ausführungsformen kann zumindest eines der Lufteinlässe oder alle Lufteinlässe mit einem Luftstromverstärkungselement versehen sein. Die ringförmige Düse mit Lufteinlass und Luftauslass kann mittels 3D-Druckverfahren oder Spritzgussverfahren hergestellt werden. Die ringförmige Düse kann aus Kunststoff gefertigt sein, beispielsweise aus einem thermisch stabilen Kunststoff, beispielsweise PLA.

Bei Schweißoptiken, die mit Hilfe von sogenannten Handling-Systemen, wie zum Beispiel Robotern, dynamisch positioniert werden, kann ein leichteres Material von Vorteil sein. Wird die Luftführungsvorrichtung beispielsweise fest montiert, können auch andere Werkstoffe in Frage kommen.

Die ringförmige Düse kann zumindest ein Befestigungselement zur Befestigung der Düse an einer Schweißoptik, Schweißzelle und/oder Schweißvorrichtung umfassen. Das Befestigungselement kann als Befestigungsöffnung, beispielsweise einer Durchgangsöffnung, oder einem Befestigungsbolzen oder Befestigungsschraube oder Befestigungsstelle, wie einer Schweißstelle oder Lötstelle, ausgebildet sein. Das Befestigungselement kann eine Schnittstelle für eine Montagevorrichtung sein.

Die ringförmige Düse kann zwei, drei, vier oder mehr Befestigungselemente umfassen. Jedem Segment der Düse kann ein Befestigungselement zugeordnet sein. Das Befestigungselement oder die Befestigungselemente können an der äußeren Umfangsfläche der Düse angeordnet sein. Alternativ oder zusätzlich können das Befestigungselement oder die Befestigungselemente an einer Oberseite und/oder Unterseite und/oder inneren Umfangsfläche ausgebildet sein.

Bei zwei Befestigungselementen können diese an zwei sich gegenüberliegenden äußeren Umfangsflächen der Düse angeordnet sein. Die Befestigungselemente können in einem Winkelbereich von 180° zueinander beabstandet oder versetzt angeordnet sein. Beispielsweise kann jeweils zwischen zwei Lufteinlässen ein Befestigungselement angeordnet sein. Befestigungselement und Lufteinlass können in einem Winkelbereich von 90° zueinander beabstandet oder versetzt sein. Die Befestigungselemente können mittig zwischen zwei Lufteinlässen angeordnet sein.

Bei drei Befestigungselementen können diese rotationssymmetrisch am äußeren Umfang der Düse verteilt angeordnet sein. Die Befestigungselemente können jeweils in einem Winkelbereich von 120° zueinander beabstandet oder versetzt angeordnet sein. Befestigungselement und Lufteinlass können in einem Winkelbereich von 60° zueinander beabstandet oder versetzt sein. Die Befestigungselemente können mittig zwischen zwei Lufteinlässen angeordnet sein.

Bei vier Befestigungselementen können diese jeweils in einem gleichen Abstand und/oder in einem gleichen Winkel zueinander beabstandet angeordnet sein. Die Befestigungselemente können rotationssymmetrisch über die äußere Umfangsfläche der ringförmigen Düse verteilt angeordnet sein. Die Befestigungselemente können jeweils in einem Winkelbereich von 90° zueinander beabstandet oder versetzt angeordnet sein. Ein Befestigungselement kann jeweils zwischen einem Lufteinlassende eines ersten Lufteinlasses und einem Lufteinlassanfang eines zweiten Lufteinlasses angeordnet sein. Ein Lufteinlassende kann eine Mündungsstelle ober auch Übergangsstelle sein, in der der Lufteinlass tangential in den Luftkanal mündet. Die Befestigungselemente können mittig zwischen zwei Lufteinlässen angeordnet sein.

Das Befestigungselement oder die Befestigungselemente können in den Körper der Düse geprägte Flächen sein. Das Befestigungselement oder die Befestigungselemente können als koaxial zum Durchgang der ringförmigen Düse verlaufende Durchgangsöffnungen, Durchgangsbohrungen oder Durchgangslöcher, ausgebildet sein. Die Düse kann ein Befestigungselement oder mehrere Befestigungselemente aufweisen, die einteilig mit einem Düsenkörper ausgebildet sein können. Das Befestigungselement oder die Befestigungselemente können in Form von an der Düse angebrachte oder eingeprägte Schlaufen oder Laschen ausgebildet sein.

Mit dem Befestigungselement oder den Befestigungselementen können korrespondierende, an der Schweißvorrichtung, Schweißzelle und/oder an der Schweißoptik vorgesehene Befestigungselemente lösbar verbunden werden.

Die Aufgabe wird erfindungsgemäß zudem gelöst durch eine Schweißvorrichtung zur Bearbeitung eines Werkstücks mit zumindest einer Schweißoptik zur Formung eines auf das Werkstück gerichteten Schweißstrahls und einer mit der Schweißoptik verbundenen Luftführungsvorrichtung nach der vorhergehenden Beschreibung zur Erzeugung eines auf eine Schweißstelle gerichteten Luftstroms.

Die Schweißvorrichtung kann eine Laserschweißvorrichtung mit einer Schweißoptik zur Formung eines Laserstrahls sein. Die Schweißvorrichtung kann eine Haltevorrichtung zur Befestigung der Luftführungsvorrichtung zur Erzeugung eines auf eine Schweißstelle gerichteten Luftstroms umfassen.

Die Luftführungsvorrichtung kann in einem Raum zwischen der Schweißoptik und dem Werkstück angeordnet sein.

Die Luftführungsvorrichtung kann derart relativ zur Schweißoptik angeordnet sein, dass der Schweißstrahl der Schweißoptik durch ein Düsenloch der ringförmigen Düse hindurch verläuft. Die ringförmige Düse kann den Schweißstrahl ringförmig umgeben. Der Luftauslass kann derart eingerichtet sein, dass der Luftstrom radial nach innen und schräg in Richtung auf die Schweißstelle ausgerichtet ist. Die ringförmige Düse kann mittels des zumindest einen Befestigungselements, welches an einer äußeren Umfangsfläche der Düse angeordnet sein kann, derart an der Schweißoptik befestigt werden, dass ein Strahlengang des Schweißstrahls nicht beeinflusst wird.

Zusammenfassend und mit anderen Worten ausgedrückt ist durch die Erfindung eine Luftführungsvorrichtung in Form eines Luftstromerzeugers bereitgestellt, wobei der Luftstrom, der sich zwischen der ringförmigen oder torusförmigen Düse und der Schweißstelle entwickelt, zu einer konstanten Bildung einer Dampffackel mit reduzierter optischer Dichte während des Schweißens führt. Zusätzlich werden Anzahl und Intensität der Schweißspritzer verringert. Weiterhin ist eine Ablenkung der Spritzer in radialer Richtung nach außen erzielbar. Als Folge dieser Effekte wird die Stabilität eines Schweißprozesses, insbesondere Laserschweißprozesses, weitestgehend erhöht. Des Weiteren kann ein besserer Schutz der empfindlichen optischen Elemente vor Verschmutzung oder gar Beschädigung erreicht werden.

Die Luftführungsvorrichtung erzeugt gleichzeitig einen abwärts gerichteten Wirbel. Die Luftführungsvorrichtung kann als 3D-Druck aus einem thermisch stabilen Kunststoff konstruiert und hergestellt werden.

Der zumindest eine Lufteinlass, beispielsweise aufweisend eine Einlassöffnung und einen Einlasskanal oder Einlassrohr, kann derart ausgerichtet sein, dass sich der Einlasskanal oder Einlassrohr tangential relativ zur äußeren Umfangsfläche der ringförmigen Düse erstreckt und in den Luftkanal, insbesondere Luftraum oder Hohlraum, tangential mündet. Eine Luftzufuhr in den Luftkanal erfolgt also bevorzugt im Wesentlichen tangential.

Durch die tangentiale Anordnung des Lufteinlasses können eine Kontrollierung und Steuerung des auf die Schweißstelle gerichteten Luftstroms verbessert werden. Des Weiteren ermöglicht der tangential angeordnete Lufteinlass eine beschleunigte Bildung des Luftstroms mit einer gewünschten Strömungsgeschwindigkeit und/oder einem gewünschten Luftdruck. Ein diaboloförmiger Luftstrom unterhalb der Düse, insbesondere ein sogenannter Vortex, kann in einfacher und schneller Weise erzeugt werden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine perspektivische Ansicht einer erfindungsgemäßen Luftführungsvorrichtung gemäß einem ersten Ausführungsbeispiel, aufweisend eine ringförmige Düse zur Erzeugung eines auf eine Schweißstelle gerichteten Luftstroms,
- Fig. 2:: eine Draufsicht der erfindungsgemäßen Luftführungsvorrichtung gemäß dem ersten Ausführungsbeispiel,
- Fig. 3:: einen Schnitt entlang der Linie I - I in Fig. 1,
- Fig. 4:: eine Seitenansicht der erfindungsgemäßen Luftführungsvorrichtung gemäß dem ersten Ausführungsbeispiel,
- Fig. 5:: eine Draufsicht einer erfindungsgemäßen Luftführungsvorrichtung gemäß einem zweiten Ausführungsbeispiel, aufweisend eine ringförmige Düse zur Erzeugung eines auf eine Schweißstelle gerichteten Luftstroms und Luftstromverstärkungselementen,
- Fig. 6:: in perspektivischer Ansicht ein Luftstromverstärkungselement, und
- Fig. 7:: eine perspektivische Ansicht eine erfindungsgemäße Schweißvorrichtung, insbesondere Laserschweißvorrichtung, mit einer Schweißoptik und einer mit dieser verbundenen Luftführungsvorrichtung.

Einander entsprechende Teile sind in allen Figuren mit den gleichen Bezugszeichen versehen.

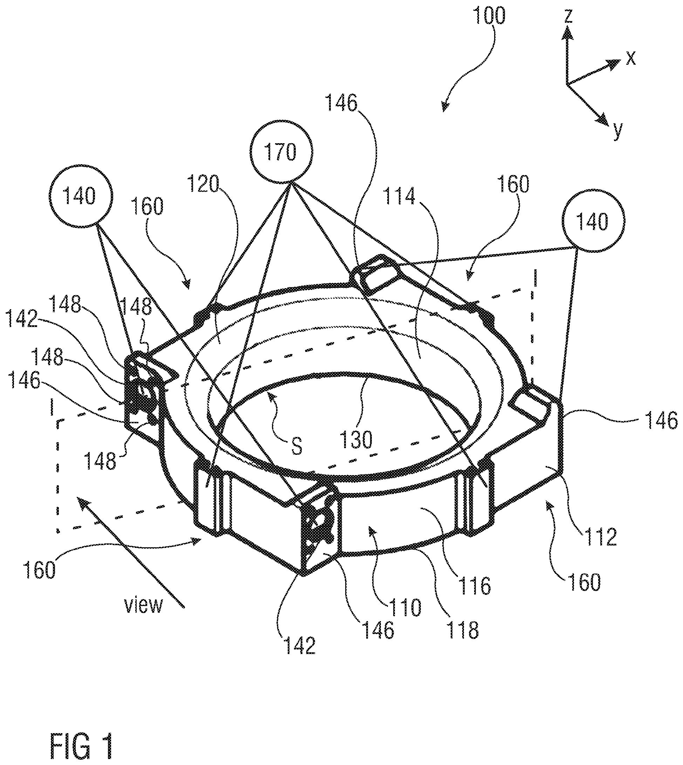

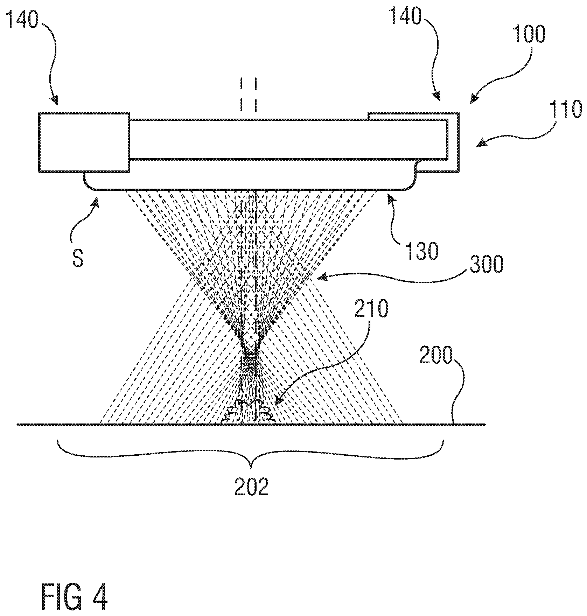

Figur 1 zeigt eine Luftführungsvorrichtung 100 gemäß einem ersten Ausführungsbeispiel zur Beeinflussung von Schweißspritzern 210 und/oder Dampffackeln und/oder Prozessleuchten und/oder Schweißrauch während einer Bearbeitung, insbesondere eines Schweißvorgangs, eines Werkstücks 200, wie in Figuren 4 und 9 gezeigt.

In Figur 1 ist schematisch ein Koordinatensystem zur Veranschaulichung von drei senkrecht zueinander verlaufenden Raumrichtungen gezeigt: eine Längsrichtung x, eine zu der Längsrichtung x senkrecht verlaufende Querrichtung y und eine Vertikalrichtung z, die senkrecht zu der Längsrichtung x und senkrecht zu der Querrichtung y verläuft.

Die Luftführungsvorrichtung 100 umfasst eine ringförmige Düse 110 zur Erzeugung eines auf eine Schweißstelle 202 gerichteten Luftstroms 300, wie in Figur 4 dargestellt.

Die Düse 110 umfasst einen ringförmigen Grundkörper 112 mit einer Innenwandung 114, einer Außenwandung 116, einer Unterseite 118 und einer Oberseite 120. Die Oberseite 120 verbindet die Innenwandung 114 und die Außenwandung 116. Die Außenwandung 116 ist mit der Unterseite 118 verbunden. Zwischen der Unterseite 118 und der Innenwandung 114 ist ein Spalt S gebildet. Der Spalt S bildet dabei einen Luftauslass 130 der Düse 110. Der Grundkörper 112 kann einteilig ausgebildet sein. Der Luftauslass 130 ist ein ringförmiger Spalt S, der zwischen der Innenwandung 114 und der Unterseite 118 der Düse 110 ausgebildet ist. Der Luftauslass 130 ist durch den zwischen der Innenwandung 114 und der Unterseite 118 gebildeten Spalt S geformt. Der Luftauslass 130 verläuft entlang einer inneren Umfangsfläche der Düse 110.

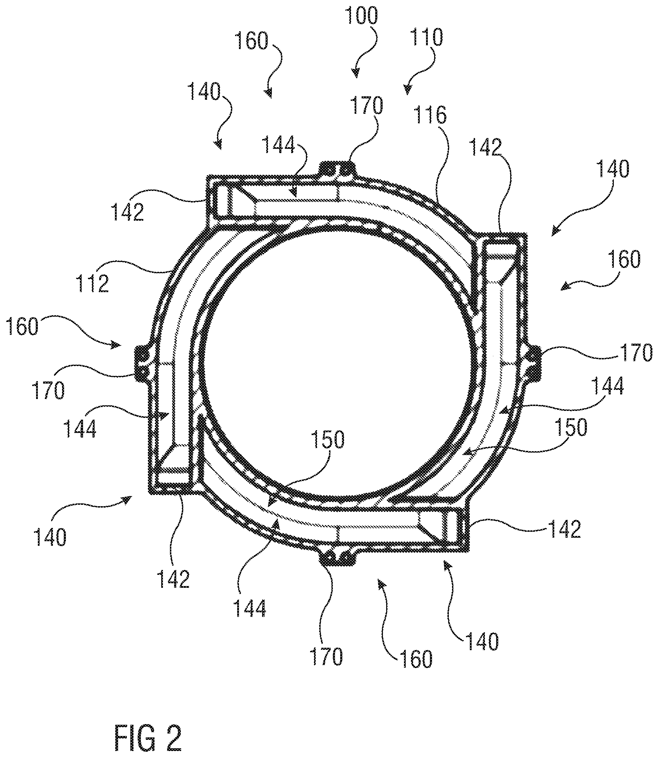

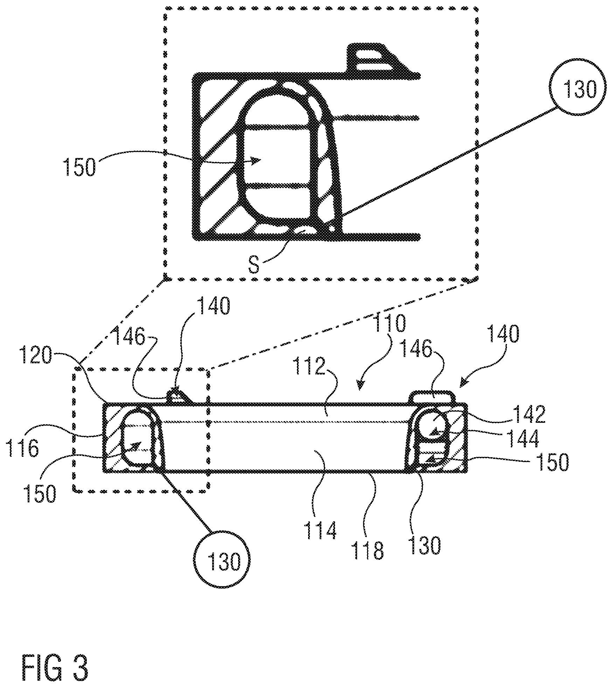

Weiterhin umfasst die Düse 110 vier am äußeren Umfang rotationssymmetrisch verteilte Lufteinlässe 140. Die Lufteinlässe 140 sind an einer äußeren Umfangsfläche des Grundkörpers 112 angeordnet und münden tangential in einen Luftkanal 150, wie in Figuren 2 und 3 gezeigt, der Düse 110. Der Luftkanal 150 verläuft ringförmig durch den Grundkörper 112. Der Luftkanal 150 ist durch die Innenwandung 114, der Außenwandung 116, der Unterseite 118 und der Oberseite 120 gebildet.

Die Lufteinlässe 140 münden jeweils tangential in den Luftkanal 150. Die Lufteinlässe 140 ragen tangential vom Umfang, insbesondere von der Außenwand 116, der Düse 110 ab. Die Lufteinlässe 140 umfassen jeweils eine Einlassöffnung 142 und einen Einlasskanal 144, wie in Figuren 2 und 3 zu sehen, wobei der Einlasskanal 144 sich tangential relativ zu der durch die Außenwandung 114 definierten äußeren Umfangsfläche der ringförmigen Düse 110 erstreckt und in den Luftkanal 150, insbesondere Luftraum oder Hohlraum, tangential mündet. Eine Luftzufuhr in den Luftkanal 150 erfolgt also tangential.

Die jeweilige Einlassöffnung 142 und/oder der jeweilige Einlasskanal 144 können/kann beispielsweise eine kleinere Querschnittsfläche als der Luftkanal 150 aufweisen. Eine Form des Luftkanals 150 kann variieren. Beispielsweise ist der Luftkanal 150 rund oder ovalförmig ausgebildet. Der Luftkanal 150 kann eine größere Querschnittsfläche als der der jeweiligen Einlassöffnung 142 und/oder des jeweiligen Einlasskanals 144 aufweisen.

Im dargestellten Ausführungsbeispiel ist der jeweilige Lufteinlass 140 im Wesentlichen rohrförmig ausgebildet oder kann eine andere Form aufweisen.

Die Lufteinlässe 140 weisen jeweils eine Anbindungsschnittstelle 146 auf, mittels der der jeweilige Lufteinlass 140 mit einer in Figur 9 gezeigte Belüftungseinheit 400, beispielsweise einem Gebläse und/oder einer Druckluftzufuhreinheit, koppelbar oder gekoppelt ist. Im dargestellten Ausführungsbeispiel erstreckt sich die jeweilige Anbindungsschnittstelle 146 in Vertikalrichtung z. Optional kann sich die jeweilige Anbindungsschnittstelle 146 auch in Querrichtung y und/oder Längsrichtung x erstrecken. Die Anbindungsschnittstellen 146 sind beispielsweise in Form einer Anbindungsplatte ausgebildet. Die jeweilige Anbindungsschnittstelle 146 umfasst beispielsweise eine Anzahl von Anbindungsöffnungen 148, wie beispielsweise Durchgangsbohrungen oder Durchgangslöcher für beispielsweise Schrauben, Bolzen und/oder Stifte. Im dargestellten Ausführungsbeispiel umfasst jede Anbindungsschnittstelle 146 vier um den jeweiligen Lufteinlass 140, insbesondere um die jeweilige Einlassöffnung 142, verteilte Anbindungsöffnungen 148.

Durch die tangentiale Anordnung der Lufteinlässe 140 kann der Luftstrom 300 verbessert kontrolliert, ausgerichtet und gesteuert werden. Strömungsgeschwindigkeiten des Luftstroms 300 können durch die Belüftungseinheit 400 individuell eingestellt werden. Des Weiteren ermöglichen die tangential angeordneten Lufteinlässe 140 eine Bildung des Luftstroms 300 mit einer gewünschten Strömungsgeschwindigkeit und/oder einem gewünschten Luftdruck. Die tangentiale Anordnung der Lufteinlässe 140 verkürzen einen Zufuhrweg und damit Bildungsweg des Luftstroms 300. Ein diaboloförmiger Luftstrom 300 unterhalb der Düse 110, insbesondere ein sogenannter Vortex, kann in einfacher, schneller und kontrollierter Weise erzeugt werden.

Die Funktion der Luftführungsvorrichtung 100 kann wie folgt beschrieben werden: Die ringförmige Düse 110 erzeugt einen rotationssymmetrischen Luftstrom 300, insbesondere Luftwirbel, im Bereich einer in Längsrichtung x verlaufenden Strahlachse, wobei über die Lufteinlässe 140 zeitgleich oder zeitlich versetzt Luft in den Luftkanal 150 der Düse 110 zugeführt wird. Dies geschieht durch die segmentierte, ringkanalförmige Düse 110 mit einem Lufteinlass 140 pro Segment 160, wobei durch die Lufteinlässe 140 ein tangentialer Hochgeschwindigkeitsluftstrom in den Luftkanal 150 am Umfang der Düse 140 eingeführt und anschließend aus dem Luftauslass 130 ausgeführt wird. Dieser Luftstrom 300 kann durch so genannte Luftstromverstärker, die mit Druckluft betrieben werden, und/oder durch ein Belüftungssystem mit entsprechenden Eigenschaften erzeugt werden.

Die in der Düse 110 rotierende Luft verlässt den Luftkanal 150 mit hoher Geschwindigkeit entlang des Luftauslasses 130. Durch die entstehenden Druckverhältnisse strömt zusätzliche Umgebungsluft aus einem Bereich oberhalb und/oder unterhalb der Düse 110 über einen Durchmesser der ringförmigen Düse 110, auch Ringkammer, Ringdüse oder Düsenring genannt, zur Schweißebene hinunter.

Die ringförmige Düse 110 ist in vier Segmenten 160 unterteilt. Jedem Segment 160 ist ein Lufteinlass 140 zugeordnet. Die vier Segmente 160 sind gleichgroß ausgebildet. Die vier Lufteinlässe 140 sind jeweils in einem gleichen Abstand und/oder in einem gleichen Winkel zueinander beabstandet angeordnet. Die Lufteinlässe 140 sind rotationssymmetrisch über die äußere Umfangsfläche der ringförmigen Düse 110 verteilt angeordnet. Die Lufteinlässe 140 sind jeweils in einem Winkelbereich von 90° zueinander beabstandet oder versetzt angeordnet.

Die ringförmige Düse 110 umfasst vier über die Außenwandung 116 und somit über die äußere Umfangsfläche verteilte Befestigungselemente 170 zur Befestigung der Düse 110 an einer Schweißvorrichtung 500. Das jeweilige Befestigungselement 170 kann zumindest eine in Längsrichtung x verlaufende Durchgangsöffnung umfassen. Die Befestigungselemente 170 bilden jeweils eine Schnittstelle für eine Montagevorrichtung.

Die Befestigungselemente 170 erstrecken sich in Vertikalrichtung z entlang einer Gesamthöhe der Düse 110, insbesondere entlang der Außenwandung 116. Die Befestigungselemente 170 sind beispielsweise als von der Außenwandung 116 abragende Erhebungen ausgebildet.

Die Befestigungselemente 170 sind jeweils in einem gleichen Abstand und/oder in einem gleichen Winkel zueinander beabstandet angeordnet. Die Befestigungselemente 170 sind rotationssymmetrisch über die äußere Umfangsfläche der ringförmigen Düse 110 verteilt angeordnet. Die Befestigungselemente 170 sind jeweils in einem Winkelbereich von 90° zueinander beabstandet oder versetzt angeordnet. Ein Befestigungselement 170 ist jeweils mittig zwischen zwei Lufteinlässen 140 angeordnet.

Die Befestigungselemente 170 können in den Grundkörper 112 der Düse 110 geprägte Flächen, Taschen und/oder Schlaufen sein. Mit den Befestigungselementen 170 können korrespondierende, an der Schweißvorrichtung 500 und/oder an einer Schweißoptik 502 vorgesehene Befestigungselemente, beispielsweise Schrauben, lösbar verbunden werden.

Figur 2 zeigt eine Draufsicht der erfindungsgemäßen Luftführungsvorrichtung 100 gemäß dem ersten Ausführungsbeispiel.

Der Grundkörper 112 der Düse 110 ist in vier Segmente 160 unterteilt. Jedem Segment 160 ist ein Lufteinlass 140 und ein Befestigungselement 170 zugeordnet. Die Lufteinlässe 140 münden jeweils tangential in den Luftkanal 150 der Düse 110. Die Befestigungselemente 170 weisen jeweils zwei Durchgangsöffnungen auf.

Durch diese Art der Befestigung der Düse 110 an einer Schweißvorrichtung 500 und/oder an einer Schweißoptik 502 und/oder an einer Belüftungseinheit 400 kann die Funktion der Düse 110 ungehindert und uneingeschränkt ablaufen.

Figur 3 zeigt einen Schnitt entlang der Linie I - I in Figur 1.

Der Luftauslass 130 ist in einem vorgegebenen Winkel relativ zu einer durch die Düse 110 verlaufende Vertikalachse ausgerichtet. Im dargestellten Ausführungsbeispiel verläuft die Außenwandung 116 und die Innenwandung 114 im Wesentlichen parallel zur Vertikalrichtung z und/oder Vertikalachse.

Der Luftauslass 130 ist demnach in einem vorgegebenen Winkel relativ zur Außenwandung 116 und/oder Innenwandung 114 nach innen ausgerichtet. Der Luftauslass 130 ist in einem vorgegebenen Winkel von einer durch die innere Umfangsfläche definierten Ebene ausgerichtet.

Der Luftauslass 130 ist radial nach innen und unter einem Winkel von ca. 30° bis 50°, insbesondere 45°, im Verhältnis zur Vertikalachse gerichtet. Der ringförmige Luftauslass 130 kann in diesem Winkel von beispielsweise ca. 45° in Richtung des zu bearbeitenden Werkstücks 200 gerichtet sein beziehungsweise in Richtung eines Punktes oberhalb des Werkstücks 200 zur Ausbildung einer Diabolotaille gerichtet sein.

Der jeweilige Lufteinlass 140, insbesondere Einlasskanal 144, kann im Querschnitt eine Fläche aufweisen, die kleiner als eine Querschnittsfläche des Luftkanals 150 ist. Optional kann der Querschnitt des jeweiligen Lufteinlasses 140, insbesondere des Einlasskanals 144, größer als der Querschnitt des Luftkanals 150 sein. In einer weiteren Variante kann der jeweilige Lufteinlass 140, insbesondere Einlasskanal 144, einen gleichen Querschnitt wie der des Luftkanals 150 aufweisen.

Der Lufteinlass 140, insbesondere Einlasskanal 144, kann oberhalb einer Erstreckungsrichtung oder Ausdehnungsrichtung des Luftkanals 150 in diesen münden. Optional oder alternativ zusätzlich kann der Lufteinlass 140, insbesondere Einlasskanal 144, seitlich der Erstreckungsrichtung oder Ausdehnungsrichtung des Luftkanals 150 in diesen münden.

Figur 4 zeigt eine Seitenansicht der erfindungsgemäßen Luftführungsvorrichtung 100 gemäß dem ersten Ausführungsbeispiel.

Über die ringförmige Düse 110, auch Ringdüse genannt, mit tangential angeordneten Lufteinlässen 140 kann ein diaboloförmiger Luftstrom 300, beispielsweise Luftwirbel oder Wirbelrohr oder Wirbelkanal, erzeugt werden. Unter einem diaboloförmigen Luftstrom 300 wird insbesondere ein Luftstrom verstanden, der in Doppelkegelform oder in Form von zwei gegenüberliegenden und einander überlappenden, insbesondere rotationssymmetrischen, Kegeln oder von zwei gegenüberliegenden und einander überlappenden, insbesondere rotationssymmetrischen, Halbkugeln erzeugt wird. Die einander gegenüberliegenden Formen, insbesondere Halbkugeln, können beispielsweise identisch konvexe Außenflächen aufweisen.

Beispielsweise kann ein rotationssymmetrischer Luftwirbel unterhalb der Düse 110 erzeugt werden. Ein solcher Luftwirbel kann durch die segmentierte und ringkanalförmige Düse 110 mit einem Lufteinlass 140 pro Segment 160 (dargestellt in Figuren 1 und 2) erzielt werden. Die in den Segmenten 160, insbesondere torusförmigen Segmenten 160, rotierende Luft kann den Luftkanal 150, d. h. die Düse 110, mit hoher Geschwindigkeit über den Luftauslass 130 verlassen. Gemäß einem nicht näher dargestellten Ausführungsbeispiel kann die Düse 110 im Wesentlichen torusförmig ausgebildet sein.

Durch den Luftauslass 130 kann die rotierende Luft von der inneren Umfangsfläche radial in Richtung der Schweißstelle 202 gezielt konzentriert werden.

Ein mittels der erfindungsgemäßen Luftführungsvorrichtung 100, insbesondere mittels der erfindungsgemäßen Düse 110, erzeugter Luftstrom 300 führt zu einer Reduzierung und/oder Ablenkung von Schweißspritzern 210. Durch einen solchen Luftstrom 300 kann ein Schweißprozess weitestgehend stabilisiert werden und ein flaches, kompaktes Prozessleuchten und eine reduzierte Dampffackel erzielt werden. Des Weiteren wird ein Strahlengang frei von Schweißspritzern 210 und Schweißrauch gehalten.

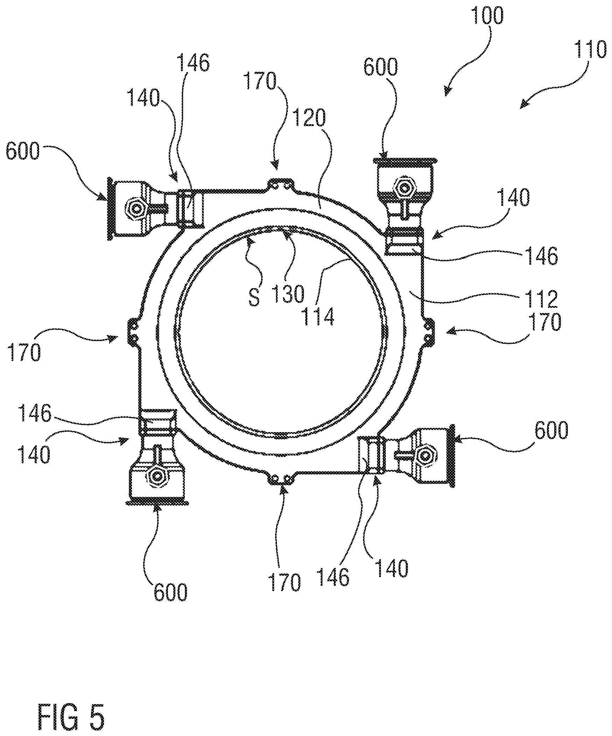

Figur 5 zeigt eine Draufsicht einer erfindungsgemäßen Luftführungsvorrichtung 100 gemäß einem zweiten Ausführungsbeispiel, aufweisend eine ringförmige Düse 110 zur Erzeugung eines auf eine Schweißstelle 202 gerichteten Luftstroms 300 und Luftstromverstärkungselementen 600.

Die Düse 110 umfasst einen ringförmigen Grundkörper 112 mit einer Innenwandung 114, einer Außenwandung 116, einer Unterseite 118 und einer Oberseite 120. Die Oberseite 120 verbindet die Innenwandung 114 und die Außenwandung 116. Die Außenwandung 116 ist mit der Unterseite 118 verbunden. Zwischen der Unterseite 118 und der Innenwandung 114 ist ein Spalt S gebildet. Der Spalt S bildet dabei einen Luftauslass 130 der Düse 110. Der Grundkörper 112 kann einteilig ausgebildet sein. Der Luftauslass 130 ist ein ringförmiger Spalt S, der zwischen der Innenwandung 114 und der Unterseite 118 der Düse 110 ausgebildet ist. Der Luftauslass 130 ist durch den zwischen der Innenwandung 114 und der Unterseite 118 gebildeten Spalt S geformt. Der Luftauslass 130 verläuft entlang einer inneren Umfangsfläche der Düse 110.

Weiterhin umfasst die Düse 110 vier am äußeren Umfang rotationssymmetrisch verteilte Lufteinlässe 140. Die Lufteinlässe 140 sind an einer äußeren Umfangsfläche des Grundkörpers 112 angeordnet und münden tangential in einen Luftkanal 150 der Düse 110, wie in Figuren 2 und 3 gezeigt. Der Luftkanal 150 verläuft ringförmig durch den Grundkörper 112. Der Luftkanal 150 ist durch die Innenwandung 114, der Außenwandung 116, der Unterseite 118 und der Oberseite 120 gebildet.

Die Lufteinlässe 140 münden jeweils tangential in den Luftkanal 150. Die Lufteinlässe 140 ragen tangential vom Umfang, insbesondere von der Außenwand 116, der Düse 110 ab. Die Lufteinlässe 140 umfassen jeweils eine Einlassöffnung 142 und einen Einlasskanal 144, wie in Figuren 2 und 3 zu sehen, wobei der Einlasskanal 144 sich tangential relativ zu der durch die Außenwandung 114 definierten äußeren Umfangsfläche der ringförmigen Düse 110 erstreckt und in den Luftkanal 150, insbesondere Luftraum oder Hohlraum, tangential mündet. Eine Luftzufuhr in den Luftkanal 150 erfolgt also tangential.

Gemäß einem weiteren Ausführungsbeispiel können die Lufteinlässe 140 jeweils in einem azimutalen Winkel in den Luftkanal 150 der Düse 110 münden. Beispielsweise kann ein solcher Winkel 20° bis 50°, insbesondere 45°, betragen.

Im dargestellten Ausführungsbeispiel ist der jeweilige Lufteinlass 140 im Wesentlichen rohrförmig ausgebildet. Optional kann der jeweilige Lufteinlass 140 im Querschnitt ovalförmig ausgebildet sein oder eine andere Form aufweisen.

Die Lufteinlässe 140 weisen jeweils eine Anbindungsschnittstelle 146 auf, mittels der der jeweilige Lufteinlass 140 mit einer in Figur 9 gezeigte Belüftungseinheit 400, beispielsweise einem Gebläse und/oder einer Druckluftzufuhreinheit, koppelbar ist. Im dargestellten Ausführungsbeispiel ist der jeweilige Lufteinlass 140 mit einem Luftstromverstärkungselement 600 versehen.

Der jeweilige Lufteinlass 140 kann mit dem Luftstromverstärkungselement 600 lösbar oder unlösbar verbunden sein.

Das Luftstromverstärkungselement 600 kann ein herkömmliches Metallprodukt sein. Das Luftstromverstärkungselement 600 kann einen sogenannten Coanda-Effekt nutzen, um einen Volumenstrom zu erhöhen, der durch die ringförmige Düse 110 gedrückt wird.

Die Luftstromverstärkungselemente 600 sind im montierten Zustand zwischen der Düse 110 und einer Belüftungseinheit 400 geschaltet. Die Luftstromverstärkungselemente 600 sind mit Druckluft und/oder durch eine Belüftungseinheit 400 mit entsprechenden Eigenschaften betreibbar.

Die Luftstromverstärkungselemente 600 sind rotationssymmetrisch über die äußere Umfangsfläche der Düse 110 verteilt angeordnet. Die Luftstromverstärkungselemente 600 ragen tangential von der äußeren Umfangsfläche der Düse 110 ab.

Die Anbindungsschnittstellen 146 sind beispielsweise in Form einer Anbindungsplatte ausgebildet. Die jeweilige Anbindungsschnittstelle 146 umfasst beispielsweise eine Anzahl von Anbindungsöffnungen 148, wie beispielsweise Durchgangsbohrungen oder Durchgangslöcher für beispielsweise Schrauben, Bolzen und/oder Stifte. Im dargestellten Ausführungsbeispiel umfasst jede Anbindungsschnittstelle 146 vier um den jeweiligen Lufteinlass 140, insbesondere um die jeweilige Einlassöffnung 142, verteilte Anbindungsöffnungen 148.

Durch die tangentiale Anordnung der Lufteinlässe 140 kann der Luftstrom 300 verbessert kontrolliert, ausgerichtet und gesteuert werden. Strömungsgeschwindigkeiten des Luftstroms 300 können durch die Belüftungseinheit 400 individuell eingestellt werden. Des Weiteren ermöglichen die tangential angeordneten Lufteinlässe 140 eine beschleunigte Bildung des Luftstroms 300 mit einer gewünschten Strömungsgeschwindigkeit und/oder einem gewünschten Luftdruck. Die tangentiale Anordnung der Lufteinlässe 140 verkürzen einen Zufuhrweg und damit Bildungsweg des Luftstroms 300. Ein diaboloförmiger Luftstrom 300, insbesondere ein sogenannter Vortex oder Wirbelrohr, kann in einfacher, schneller und kontrollierter Weise erzeugt werden.

Die Funktion der Luftführungsvorrichtung 100 kann wie folgt beschrieben werden: Die ringförmige Düse 110 erzeugt einen rotationssymmetrischen Luftstrom 300, insbesondere Luftwirbel, im Bereich einer in Längsrichtung x verlaufenden Strahlachse, wobei über die Lufteinlässe 140 zeitgleich oder zeitlich versetzt Luft in den Luftkanal 150 der Düse 110 zugeführt wird. Dies geschieht durch die segmentierte, ringkanalförmige Düse 110 mit einem Lufteinlass 140 pro Segment 160, wobei durch die Lufteinlässe 140 ein tangentialer Hochgeschwindigkeitsluftstrom in den Luftkanal 150 am Umfang der Düse 140 eingeführt und anschließend aus dem Luftauslass 130 ausgeführt wird. Dieser Luftstrom 300 kann durch so genannte Luftstromverstärker, die mit Druckluft betrieben werden, und/oder durch ein Belüftungssystem mit entsprechenden Eigenschaften erzeugt werden.

Die in der Düse 110 rotierende Luft verlässt den Luftkanal 150 mit hoher Geschwindigkeit entlang des Luftauslasses 130. Durch die entstehenden Druckverhältnisse strömt zusätzliche Umgebungsluft aus einem Bereich oberhalb und/oder unterhalb der Düse 110 über einen Durchmesser der ringförmigen Düse 110, auch Ringkammer, Ringdüse oder Düsenring genannt, zur Schweißebene hinunter.

Die ringförmige Düse 110 ist in vier Segmenten 160 unterteilt. Jedem Segment 160 ist ein Lufteinlass 140 zugeordnet. Die vier Segmente 160 sind gleichgroß ausgebildet. Die vier Lufteinlässe 140 sind jeweils in einem gleichen Abstand und/oder in einem gleichen Winkel zueinander beabstandet angeordnet. Die Lufteinlässe 140 sind rotationssymmetrisch über die äußere Umfangsfläche der ringförmigen Düse 110 verteilt angeordnet. Die Lufteinlässe 140 sind jeweils in einem Winkelbereich von 90° zueinander beabstandet oder versetzt angeordnet.

Die ringförmige Düse 110 umfasst vier über die Außenwandung 116 und somit über die äußere Umfangsfläche verteilte Befestigungselemente 170 zur Befestigung der Düse 110 an einer Schweißvorrichtung 500. Das jeweilige Befestigungselement 170 kann zumindest eine in Längsrichtung x verlaufende Durchgangsöffnung umfassen. Die Befestigungselemente 170 bilden jeweils eine Schnittstelle für eine Montagevorrichtung.

Die Befestigungselemente 170 sind jeweils in einem gleichen Abstand und/oder in einem gleichen Winkel zueinander beabstandet angeordnet. Die Befestigungselemente 170 sind rotationssymmetrisch über die äußere Umfangsfläche der ringförmigen Düse 110 verteilt angeordnet. Die Befestigungselemente 170 sind jeweils in einem Winkelbereich von 90° zueinander beabstandet oder versetzt angeordnet. Ein Befestigungselement 170 ist jeweils mittig zwischen zwei Lufteinlässen 140 angeordnet.

Die Befestigungselemente 170 können in den Grundkörper 112 der Düse 110 geprägte Flächen, Taschen und/oder Schlaufen sein. Mit den Befestigungselementen 170 können korrespondierende, an der Schweißvorrichtung 500 und/oder an einer Schweißoptik 502 vorgesehene Befestigungselemente, beispielsweise Schrauben, lösbar verbunden werden.

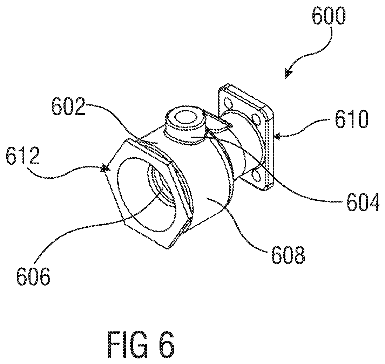

Figur 6 zeigt in perspektivischer Ansicht ein Luftstromverstärkungselement 600.

Das Luftstromverstärkungselement 600 umfasst einen konisch verlaufenden Verstärkungskörper 602. Der Verstärkungskörper 602 umfasst eine Eintrittsöffnung 604, welche im Wesentlichen senkrecht zu einem Eintrittskanal 606 angeordnet ist. Eintrittsöffnung 604 und Eintrittskanal 606 sind zur Luftzufuhr miteinander verbunden.

Die Eintrittsöffnung 604 ragt von einer äußeren Umfangsfläche des Verstärkungskörpers 602 ab. Der Eintrittskanal 606 ist im montierten Zustand des Luftstromverstärkungselements 600 and der Düse 110 koaxial und fluidtechnisch mit dem jeweiligen Lufteinlass 140 der Düse 110 verbindbar oder verbunden.

An einem Ende mit größerem Durchmesser weist der Verstärkungskörper 602 einen Ansaugtrichter 608 zum Ansaugen einer Umgebungsluft bei Druckluftzufuhr durch die Eintrittsöffnung 604 auf. An einem Ende mit kleinerem Durchmesser weist der Verstärkungskörper 602 eine Austrittsöffnung 610 auf.

Die Austrittsöffnung 610 ist im montierten Zustand des Luftstromverstärkungselements 600 and der Düse 110 koaxial und fluidtechnisch mit dem jeweiligen Lufteinlass 140 der Düse 110 verbindbar oder verbunden. Des Weiteren kann das Luftstromverstärkungselement 600 ein Verschlusselement 612 zur Spaltkontrolle im Verstärkungskörper 602 umfassen.

Das Verschlusselement 612 kann ein ringförmiges Dichtungselement sein. Das Verschlusselement 612 wird beispielsweise in den Verstärkungskörper 602 eingesetzt.

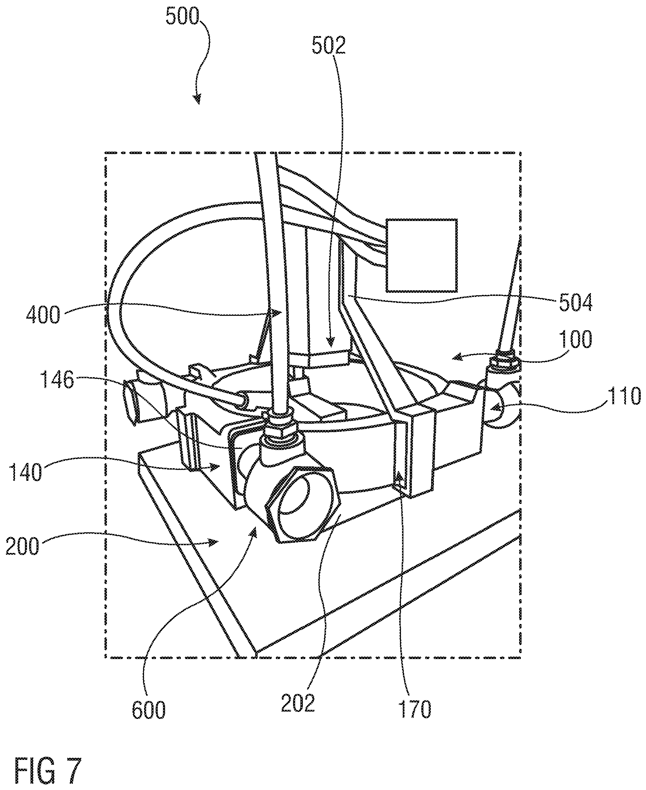

Figur 7 zeigt eine perspektivische Ansicht einer erfindungsgemäßen Schweißvorrichtung 500, insbesondere Laserschweißvorrichtung, mit einer Schweißoptik 502 und einer mit dieser verbundenen Luftführungsvorrichtung 100.

Die Luftführungsvorrichtung 100 ist in einem Raum zwischen der Schweißoptik 502 und dem Werkstück 200 angeordnet. Im dargestellten Ausführungsbeispiel ist die Luftführungsvorrichtung 100 mit Luftstromverstärkungselementen 600 versehen, über die die Luftführungsvorrichtung 100 mit der Belüftungseinheit 400 verbunden ist.

Die Luftführungsvorrichtung 100 kann derart relativ zur Schweißoptik 502 angeordnet sein, dass ein Schweißstrahl der Schweißoptik 502 durch ein zentrales Düsenloch der ringförmigen Düse 110 hindurch verläuft. Die ringförmige Düse 110 kann den Schweißstrahl ringförmig umgeben. Der Luftauslass 130 kann derart eingerichtet sein, dass der Luftstrom 300 radial nach innen und schräg in Richtung auf die Schweißstelle 202 ausgerichtet ist. Die ringförmige Düse 110 kann mittels der Befestigungselemente 170, die an der äußeren Umfangsfläche der Düse 110 angeordnet sind, derart an der Schweißoptik 502 befestigt sein, dass der Strahlengang des Schweißstrahls nicht beeinflusst wird. Die Düse 110 ist beispielsweise über vier Halteelemente 504 mit der Schweißoptik 502 verbunden. Die Halteelemente 504 sind beispielsweise über Schrauben an dem jeweiligen Befestigungselement 170 der Düse 110 befestigt. Die Halteelemente 504 sind beispielsweise Tragarme. Die Halteelemente 504 umgreifen die Befestigungselemente 170 an einem oberen Ende und einem unteren Ende in Vertikalrichtung z gesehen. Beispielsweise schließen das obere Ende und das untere Ende jeweils bündig mit der Oberseite 120 und der Unterseite 118 der Düse 110, insbesondere deren Grundkörper 112, ab. Zusammenfassend und mit anderen Worten ausgedrückt ist durch die Erfindung ein eine Luftführungsvorrichtung 100 in Form eines Luftstromerzeugers bereitgestellt, wobei der Luftstrom 300, der sich zwischen der ringförmigen oder torusförmigen Düse 110 und der Schweißstelle 202 entwickelt, zu einer konstanten Bildung einer Dampffackel mit reduzierter optischer Dichte während eines Schweißvorgangs führt. Zusätzlich werden Anzahl und Intensität der Schweißspritzer 210 verringert. Weiterhin ist eine Ablenkung der Schweißspritzer 210 in radialer Richtung nach außen erzielbar. Als Folge dieser Effekte wird die Stabilität eines Schweißprozesses, insbesondere Laserschweißprozesses, weitestgehend erhöht. Des Weiteren kann ein besserer Schutz der empfindlichen Schweißoptik 502 vor Verschmutzung oder gar Beschädigung erreicht werden.

### Bezugszeichenliste

- 100: Luftführungsvorrichtung
- 110: Düse
- 112: Grundkörper
- 114: Innenwandung
- 116: Außenwandung
- 118: Unterseite
- 120: Oberseite
- 130: Luftauslass
- 140: Lufteinlass
- 142: Einlassöffnung
- 144: Einlasskanal
- 146: Anbindungsschnittstelle
- 148: Anbindungsöffnung
- 150: Luftkanal
- 160: Segment
- 170: Befestigungselement

- 200: Werkstück
- 202: Schweißstelle
- 210: Schweißspritzer

- 300: Luftstrom

- 400: Belüftungseinheit

- 500: Schweißvorrichtung
- 502: Schweißoptik
- 504: Halteelement
- 600: Luftstromverstärkungselement
- 602: Verstärkungskörper
- 604: Eintrittsöffnung
- 606: Eintrittskanal
- 608: Ansaugtrichter
- 610: Austrittsöffnung
- 612: Verschlusselement

- S: Spalt
- x: Längsrichtung
- y: Querrichtung
- z: Vertikalrichtung

## Patentansprüche

1. Luftführungsvorrichtung (100) zur Beeinflussung von Schweißspritzern (210) während einer Bearbeitung eines Werkstücks (200), umfassend zumindest eine ringförmige Düse (110) zur Erzeugung eines auf eine Schweißstelle (202) gerichteten Luftstroms (300),
**dadurch gekennzeichnet, dass** die ringförmige Düse (110) zumindest einen Lufteinlass (140) und zumindest einen Luftauslass (130) aufweist, wobei der Luftauslass (130) in Form eines eine innere Umfangsfläche der ringförmigen Düse (110) umlaufenden Spalts (S) ausgebildet ist und der Lufteinlass (140) an einer äußeren Umfangsfläche der ringförmigen Düse (110) angeordnet ist und im Wesentlichen tangential in einen ringförmigen Luftkanal (150) der ringförmigen Düse (110) mündet, wobei über die ringförmige Düse (110) mit zumindest einem tangential angeordneten Lufteinlass (140) ein diaboloförmiger Luftstrom (300) unterhalb der Düse (110) erzeugbar ist.

2. Luftführungsvorrichtung (100) nach Anspruch 1, **dadurch gekennzeichnet, dass** die Düse (110) in zumindest zwei Segmente (160) unterteilt ist, wobei jedem Segment (160) ein Lufteinlass (140) zugeordnet ist.

3. Luftführungsvorrichtung (100) nach Anspruch 1 oder 2, **dadurch gekennzeichnet, dass** die Düse (110) in vier Segmente (160) unterteilt ist, wobei jedem Segment (160) ein Lufteinlass (140) zugeordnet ist.

4. Luftführungsvorrichtung (100) nach einem der Ansprüche 1 bis 3, **dadurch gekennzeichnet, dass** die Lufteinlässe (140) rotationssymmetrisch über die äußere Umfangsfläche der Düse (110) verteilt angeordnet sind.

5. Luftführungsvorrichtung (100) nach einem der Ansprüche 1 bis 4, **dadurch gekennzeichnet, dass** der Luftauslass (130) an einer inneren Umfangsfläche der Düse (110) angeordnet ist.

6. Luftführungsvorrichtung (100) nach einem der Ansprüche 1 bis 5, **dadurch gekennzeichnet, dass** der Luftauslass (130) in einem vorgegebenen Winkel von einer durch die innere Umfangsfläche definierten Ebene ausgerichtet ist.

7. Luftführungsvorrichtung (100) nach einem der Ansprüche 1 bis 6, **dadurch gekennzeichnet, dass** der Lufteinlass (140) eine Anbindungsschnittstelle (146) aufweist, mittels der der Lufteinlass (140) mit einem Luftstromverstärkungselement (600) und/oder einer Belüftungseinheit (400) koppelbar ist.

8. Luftführungsvorrichtung (100) nach Anspruch 7 in Kombination mit einem Luftstromverstärkungselement (600), **dadurch gekennzeichnet, dass** die Anbindungsschnittstelle (146) mit dem Luftstromverstärkungselement (600) gekoppelt ist, und das Luftstromverstärkungselement (600) einen konisch verlaufenden Verstärkungskörper (602) umfasst, der einen Eintrittskanal (606), eine senkrecht zum Eintrittskanal (606) angeordnete Eintrittsöffnung (604) und eine Austrittsöffnung (610) aufweist, welche an einem Ende mit kleinerem Durchmesser des Verstärkungskörpers (602) stattfindet.

9. Luftführungsvorrichtung (100) nach einem der Ansprüche 1 bis 8, **dadurch gekennzeichnet, dass** die Düse (110) zumindest ein Befestigungselement (170) zur Befestigung der Düse (110) an einer Schweißvorrichtung (500) umfasst.

10. Schweißvorrichtung (500) zur Bearbeitung eines Werkstücks (200) mit zumindest einer Schweißoptik (502) zur Formung eines auf das Werkstück (200) gerichteten Schweißstrahls und einer mit der Schweißoptik (502) verbundenen Luftführungsvorrichtung (100) nach einem der vorhergehenden Ansprüche zur Erzeugung eines auf eine Schweißstelle (202) gerichteten Luftstroms (300), **dadurch gekennzeichnet, dass** die Luftführungsvorrichtung (100) optikfest angeordnet ist.

## Claims

1. Air-guiding apparatus (100) for influencing weld spatter (210) during processing of a workpiece (200), comprising at least one annular nozzle (110) for generating an air flow (300) directed towards a weld site (202),
**characterized in that** the annular nozzle (110) has at least one air inlet (140) and at least one air outlet (130), where the air outlet (130) takes the form of a gap (S) running around an inner circumferential face of the annular nozzle (110) and the air inlet (140) is disposed on an outer circumferential face of the annular nozzle (110) and opens essentially tangentially into an annular air duct (150) of the annular nozzle (110), where a diaboloid air flow (300) beneath the nozzle (110) is generatable by means of the annular nozzle (110) with at least one air inlet (140) in tangential arrangement.

2. Air-guiding apparatus (100) according to Claim 1, **characterized in that** the nozzle (110) is divided into at least two segments (160), where each segment (160) is assigned an air inlet (140).

3. Air-guiding apparatus (100) according to Claim 1 or 2, **characterized in that** the nozzle (110) is divided into four segments (160), where each segment (160) is assigned an air inlet (140).

4. Air-guiding apparatus (100) according to any of Claims 1 to 3, **characterized in that** the air inlets (140) are in a rotationally symmetric distribution over the outer circumferential face of the nozzle (110).

5. Air-guiding apparatus (100) according to any of Claims 1 to 4, **characterized in that** the air outlet (130) is disposed on an inner circumferential face of the nozzle (110).

6. Air-guiding apparatus (100) according to any of Claims 1 to 5, **characterized in that** the air outlet (130) is aligned at a defined angle from a plane defined by the inner circumferential face.

7. Air-guiding apparatus (100) according to any of Claims 1 to 6, **characterized in that** the air inlet (140) has an attachment interface (146) by means of which the air inlet (140) can be coupled to an air flow booster element (600) and/or a ventilation unit (400).

8. Air-guiding apparatus (100) according to Claim 7 in combination with an air flow booster element (600), **characterized in that** the attachment interface (146) is coupled to the air flow booster element (600), and the air flow booster element (600) comprises a conical booster body (602) having an entry duct (606), an entry opening (604) arranged perpendicular to the entry duct (606), and an exit opening (610) which takes place at an end of the reinforcing body (602) with smaller diameter.

9. Air-guiding apparatus (100) according to any of Claims 1 to 8, **characterized in that** the nozzle (110) comprises at least one securing element (170) for securing the nozzle (110) to a welding apparatus (500).

10. Welding apparatus (500) for processing a workpiece (200) having at least one set of welding optics (502) for forming a welding beam directed onto the workpiece (200) and an air-guiding apparatus (100), connected to the set of welding optics (502), according to any of the preceding claims for production of an air flow (300) directed onto a weld site (202),
**characterized in that** the air-guiding apparatus (100) is arranged fixed relative to the optics.

## Revendications

1. Dispositif de guidage d'air (100) destiné à influencer des projections de soudure (210) lors de l'usinage d'une pièce (200), comprenant au moins une buse (110) annulaire destinée à générer un flux d'air (300) dirigé sur un point de soudure (202),
**caractérisé en ce que** la buse (110) annulaire comporte au moins une entrée d'air (140) et au moins une sortie d'air (130), la sortie d'air (130) étant formée sous la forme d'une fente (S) s'étendant en périphérie autour d'une surface périphérique intérieure de la buse (110) annulaire et l'entrée d'air (140) étant disposée sur une surface périphérique extérieure de la buse (110) annulaire et débouchant sensiblement tangentiellement dans un canal d'air annulaire (150) de la buse annulaire (110), un flux d'air (300) en forme de diabolo sous la buse (110) pouvant être généré par la buse annulaire (110) avec au moins une entrée d'air (140) disposée tangentiellement.

2. Dispositif de guidage d'air (100) selon la revendication 1, **caractérisé en ce que** la buse (110) est divisée en au moins deux segments (160), une entrée d'air (140) étant associée à chaque segment (160).

3. Dispositif de guidage d'air (100) selon la revendication 1 ou 2, **caractérisé en ce que** la buse (110) est divisée en quatre segments (160), une entrée d'air (140) étant associée à chaque segment (160).

4. Dispositif de guidage d'air (100) selon l'une des revendications 1 à 3, **caractérisé en ce que** les entrées d'air (140) sont disposées de manière répartie sur la surface périphérique extérieure de la buse (110) en symétrie en rotation.

5. Dispositif de guidage d'air (100) selon l'une des revendications 1 à 4, **caractérisé en ce que** la sortie d'air (130) est disposée sur une surface périphérique intérieure de la buse (110).

6. Dispositif de guidage d'air (100) selon l'une des revendications 1 à 5, **caractérisé en ce que** la sortie d'air (130) est orientée selon un angle spécifié par rapport à un plan défini par la surface périphérique intérieure.

7. Dispositif de guidage d'air (100) selon l'une des revendications 1 à 6, **caractérisé en ce que** l'entrée d'air (140) comporte une interface de raccordement (146) permettant de coupler l'entrée d'air (140) à un élément d'amplification de flux d'air (600) et/ou une unité de ventilation (400).

8. Dispositif de guidage d'air (100) selon la revendication 7 en combinaison avec un élément d'amplification de flux d'air (600), **caractérisé en ce que** l'interface de raccordement (146) est couplée à l'élément d'amplification de flux d'air (600), et l'élément d'amplification de flux d'air (600) comprend un corps d'amplification (602) s'étendant de manière conique, qui comporte un canal d'entrée (606), une ouverture d'entrée (604) disposée perpendiculairement au canal d'entrée (606) et une ouverture de sortie (610), qui a lieu sur une extrémité avec un diamètre plus petit du corps d'amplification (602).

9. Dispositif de guidage d'air (100) selon l'une des revendications 1 à 8, **caractérisé en ce que** la buse (110) comprend au moins un élément de fixation (170) pour fixer la buse (110) sur un dispositif de soudage (500).

10. Dispositif de soudage (500) pour l'usinage d'une pièce (200) avec au moins une optique de soudage (502) pour former un faisceau de soudage dirigé sur la pièce (200) et un dispositif de guidage d'air (100) relié à l'optique de soudage (502) selon l'une des revendications précédentes pour la génération d'un flux d'air (300) dirigé sur un point de soudure (202),
**caractérisé en ce que** le dispositif de guidage d'air (100) est disposé de manière fixe par rapport à l'optique.
